# EUROPEAN PATENT APPLICATION

(11) **EP 4 512 682 A1**
(43) Date of publication of application: **26.02.2025**
(21) Application number: 24188864.3
(22) Date of filing: 16.07.2024
(51) Int. Cl.: B60W 50/00

(54) **UTILITY VEHICLE**

(30) Priority: 23.08.2023 JP 2023135277
(71) Applicant: Kubota Corporation, Osaka-shi, Osaka 556-8601 (JP)
(72) Inventor: TANAKA, Kazuhiro, Saka-shi, Osaka 5900823 (JP)
(74) Representative: Cabinet Beau de Loménie

(57) **Abstract**

Included are: a body; a travel device provided for the body; a driving source 12 configured to drive the travel device; an acceleration operating member 16 configured to receive an operation for adjusting a travel speed of the utility vehicle; a drive controller 33 configured to generate a driving signal 22 for the driving source; and an acceleration detector 26 configured to detect a vertical acceleration 25 of the body relative to ground, the drive controller 33 being configured to generate the driving signal 22 based on (i) an amount of the operation that the acceleration operating member 16 receives and (ii) the acceleration 25.

## Description

### Technical Field

The present invention relates to a utility vehicle configured to travel in response to an accelerator operation.

### Background Art

As disclosed in Patent Literature 1, utility vehicles travel as driven by a driving source such as an engine or an electric motor. Utility vehicles travel at speeds based on an operation of an accelerator pedal (that is, an acceleration operating member) such that the driving source is controlled in accordance with a signal (that is, a driving signal) corresponding to the amount of the operation of the accelerator pedal.

Utility vehicles may travel on bad roads such as rough terrain. Such travel may cause the vehicle body to shake (or vibrate) vertically and thereby cause the driver's foot on the accelerator pedal to shake. This may in turn cause the accelerator pedal to be operated greatly and thereby change the travel speed greatly as unintended by the driver.

### Citation List

Patent Literature

### Patent Literature 1

JP 2018-154191 A

### Summary of Invention

### Technical Problem

The present invention has an object of providing a utility vehicle configured to travel at speeds accurately controllable in accordance with the driver's intention.

### Solution to Problem

In order to attain the above object, a utility vehicle as an embodiment of the present invention includes: a body; a travel device provided for the body; a driving source configured to drive the travel device; an acceleration operating member configured to receive an operation for adjusting a travel speed of the utility vehicle; a drive controller configured to generate a driving signal for the driving source; and an acceleration detector configured to detect a vertical acceleration of the body relative to ground, the drive controller being configured to generate the driving signal based on (i) an amount of the operation that the acceleration operating member receives and (ii) the acceleration.

The above configuration allows that the driving signal is generated on the basis of the amount of an operation that the acceleration operating member receives , and the acceleration (that is, a shake of the body) is taken into consideration. This reduces the amount of a change of the driving signal in response to a great change in the amount of the operation of the acceleration operating member if a large shake of the body has caused the acceleration detector to detect a large vertical acceleration. This prevents the travel speed from being changed as unintended by the driver in response to an erroneous operation of the acceleration operating member due to a shake of the body, and thereby makes it possible to control the travel speed accurately in accordance with the driver's intention.

The utility vehicle may be further configured such that the drive controller changes the driving signal in accordance with an amount of a change in the amount of the operation and attenuates the change of the driving signal for the amount of the change of the amount of the operation in accordance with the acceleration.

The above configuration allows adjustment of how much the drive controller reduces the amount of a change of the driving signal in accordance with the level of the acceleration. This prevents the drive controller from reducing the amount of a change of the driving signal if the acceleration (that is, the vibration) is small and does not significantly influence the acceleration operating member, and allows the drive controller to reduce the amount of a change of the driving signal only if the vibration is so large as to influence the acceleration operating member. This in turn allows the travel speed to reflect the driver's intention more accurately, and thereby makes it possible to control the travel speed more accurately in accordance with the driver's intention.

The utility vehicle may be further configured such that the drive controller attenuates the change of the driving signal for the amount of the operation with use of a low pass filter and adjusts a time constant for the low pass filter in accordance with the acceleration.

The above configuration allows the drive controller to reduce the amount of a change of the driving signal if the amount of an operation of the acceleration operating member is large, thereby preventing a sharp change in the travel speed. The use of a low pass filter allows accurate reduction in the amount of a change of the driving signal. Adjusting the time constant for the low pass filter in accordance with the acceleration allows the amount of a change of the driving signal to be reduced on the basis of the acceleration. This makes it possible to control the travel speed more accurately in accordance with the driver's intention.

The utility vehicle may be further configured such that the drive controller decreases the time constant as the acceleration increases.

The above configuration allows the drive controller to reduce the amount of a change of the driving signal further as the acceleration increases. This reduces the influence of a shake of the body accurately, and thereby makes it possible to control the travel speed more accurately in accordance with the driver's intention.

The utility vehicle may be further configured such that the acceleration detector is an acceleration sensor.

The above configuration allows accurate detection of the acceleration, and thereby makes it possible to control the travel speed accurately in accordance with the driver's intention.

The utility vehicle may further include: a suspension configured to alleviate a vertical vibration transmitted from the ground to the body, wherein the acceleration detector includes: a stroke detector configured to detect a stroke of the suspension; and a calculator configured to differentiate the stroke twice and provide a value resulting from the differentiation as the acceleration.

Suspensions alleviate vibrations transmitted to the body. A suspension stroke allows prediction of a vertical vibration of the body. Differentiating the stroke twice provides the acceleration. This in turn makes it possible to control the travel speed accurately in accordance with the driver's intention.

The utility vehicle may be further configured such that the driving source is an electric motor, the utility vehicle further includes an inverter configured to supply electric power to the electric motor, the driving signal serves to control the electric power, which the inverter outoputs, the electric motor is operable at a number of revolutions which number corresponds to the electric power outputted from the inverter in accordance with the driving signal, and the drive controller generates the driving signal based on the amount of the operation and the acceleration.

The above configuration prevents the travel speed of an electrically operated utility vehicle from being changed as unintended by the driver in response to an erroneous operation of the acceleration operating member due to a shake of the body, and thereby makes it possible to control the travel speed accurately in accordance with the driver's intention.

### Brief Description of Drawings

Fig. 1 is a left side view of a utility vehicle.
Fig. 2 is a diagram illustrating an example configuration for controlling a driving signal.
Fig. 3 is a diagram illustrating an example data flow for controlling a driving signal.
Fig. 4 is a flowchart of an example process of controlling a driving signal.
Fig. 5 shows graphs for a description of a driving signal generated on the basis of an acceleration signal.

### Description of Embodiments

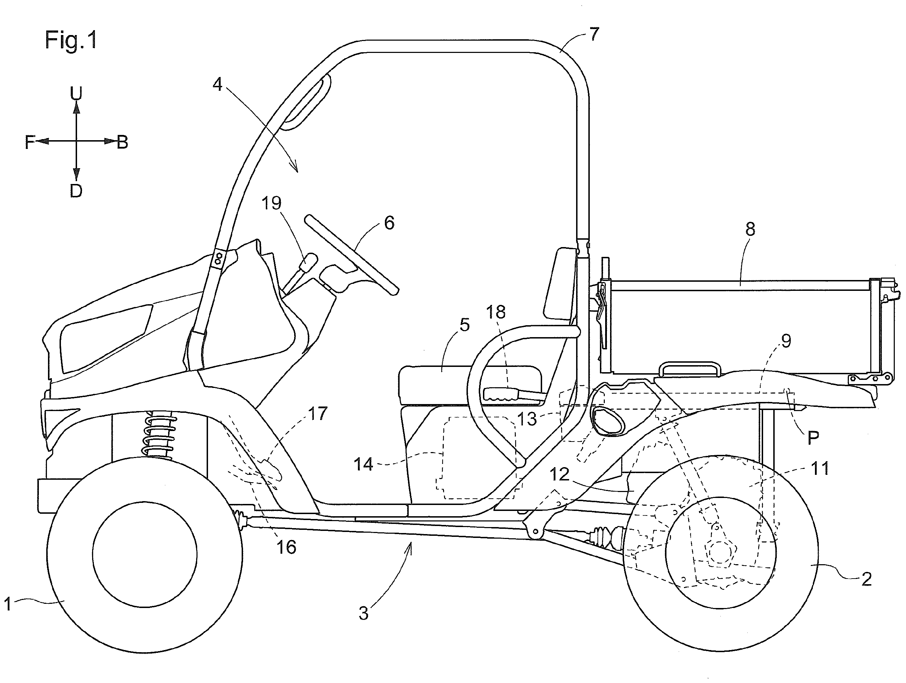

The description below deals with an electrically operated utility vehicle as an example of the utility vehicle of the present invention with reference to drawings. The description below refers to Fig. 1, which shows arrow F to indicate the forward side of the body, arrow B to indicate the backward side of the body, arrow U to indicate the upward side of the body, and arrow D to indicate the downward side of the body. The front side of Fig. 1 corresponds to the leftward side of the body, whereas the back side of Fig. 1 corresponds to the rightward side of the body. The left-right direction of the body corresponds to the width direction of the body.

### Overall Configuration of Utility Vehicle

Fig. 1 illustrates a utility vehicle for multiple purposes such as cargo transport and recreation. The utility vehicle includes a pair of left and right front wheels 1 as a travel device, a pair of left and right rear wheels 2 as a travel device, and a body 3 provided with the front and rear wheels 1 and 2. The front wheels 1 are turnable and drivable, whereas the rear wheels 2 are drivable.

The utility vehicle includes a driver section 4 disposed at a front portion of the body 3 and configured to accommodate a driver. The utility vehicle includes in the driver section 4 a driver's seat 5, a steering wheel 6 for use to change the direction of the front wheels 1, a roll-over protective structure (ROPS) 7 that defines a driver space, an accelerator pedal 16 as an acceleration operating member for use to change the travel speed; a brake pedal 17 for use to operate a wheel brake; a hand brake lever 18 for use to operate a parking brake; and a shift lever 19 for shifting gears. The acceleration operating member is not necessarily an accelerator pedal 16, and may alternatively be any other operation member such as an accelerator lever.

The utility vehicle includes a cargo box 8 backward of the driver section 4 and a body frame 9 holding the cargo box 8. The cargo box 8 is swingable up and down about a coupling axis P for the cargo box 8 and the body frame 9. The cargo box 8 is capable of being lifted into a dumping orientation and lowered into a travel orientation.

### Driving Travel Device

As illustrated in Fig. 1, the utility vehicle includes an electric motor 12 (which is an example of the "driving source"), an inverter 13, and two batteries 14 to drive the front and rear wheels 1 and 2. The electric motor 12 may be replaced with an e-Axle further including a transmission mechanism. The inverter 13 may be included in the e-Axle.

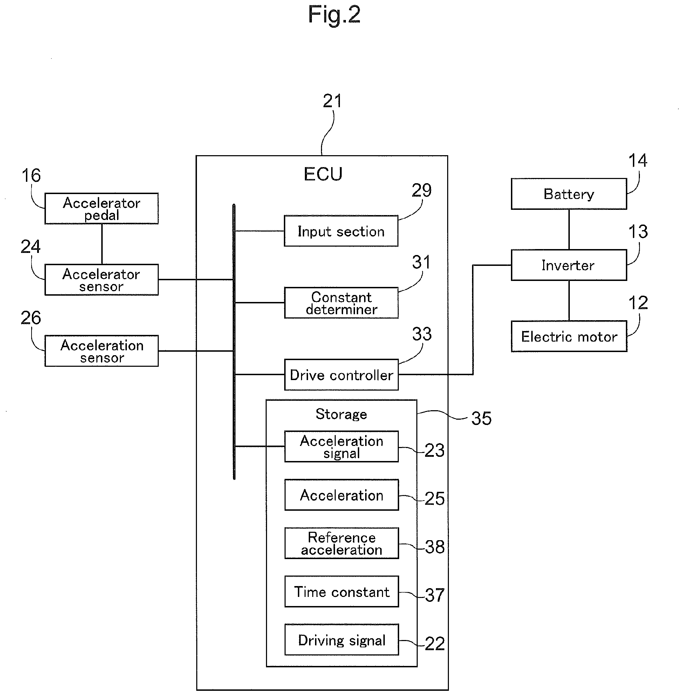

The batteries 14 feed electric power to the inverter 13, which then converts it into alternating-current electricity. The inverter 13 supplies the alternating-current electricity (that is, a driving signal 22) to the electric motor 12 to drive the electric motor 12. The electric motor 12 is operable at a number of revolutions which number corresponds to the electric power supplied from the inverter 13 in accordance with the driving signal 22 (see Fig. 2). The electric motor 12 transmits its motive power to the transmission case 11. The motive power is then varied by a transmission (not illustrated in the drawings) in the transmission case 11. The transmission outputs the varied motive power from a rear-wheel differential mechanism (not illustrated in the drawings) in the transmission case 11 to the rear wheels 2. The transmission also outputs the varied motive power to the front wheels 1.

### Driving Wheels

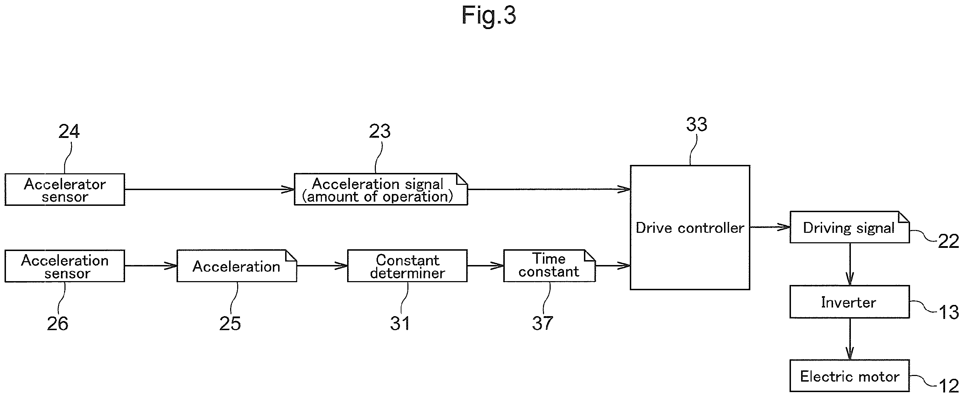

The description below deals with how the wheels are driven in response to an operation of the accelerator pedal 16, with reference to Figs. 2 and 3.

The utility vehicle includes an electronic control unit (ECU) 21 including a processor such as a central processing unit (CPU). The ECU 21 is configured to generate a driving signal 22 for controlling the inverter 13. The ECU 21 generates a driving signal 22 in response to the accelerator pedal 16 receiving an operation and in accordance with an acceleration signal 23 corresponding to the amount of the operation of the accelerator pedal 16. The utility vehicle includes an accelerator sensor 24 configured to detect the amount of the operation of the accelerator pedal 16 (that is, the acceleration signal 23). The utility vehicle may be configured to detect the amount in any manner.

The ECU 21 alleviates the influence of disturbance on the acceleration signal 23 in generating a driving signal 22. The ECU 21, to that end, detects the acceleration 25 of the body 3 and generates a driving signal 22 on the basis of the acceleration signal 23 (that is, the amount of the operation of the accelerator pedal 16) and the acceleration 25. Specifically, the ECU 21 attenuates the change of the driving signal 22 for the amount of a change of the acceleration signal 23 in accordance with the acceleration 25 to prevent the driving signal 22 from changing greatly (that is, to reduce the amount of a change of the driving signal 22) in response to a change of the acceleration signal 23 if the acceleration 25 is large.

### Configuration for Control

To perform the above operation, the utility vehicle, as illustrated in Figs. 2 and 3, includes an acceleration sensor 26 (which is an example of the "acceleration detector") configured to detect the vertical acceleration 25 of the body 3 relative to the ground.

The ECU 21 includes an input section 29, a constant determiner 31, a drive controller 33, and a storage 35.

The input section 29 is configured to receive various items of information and signals inputted to the ECU 21. The input section 29 receives, for example, an acceleration signal 23 from the accelerator sensor 24 and information on the acceleration 25 that the acceleration sensor 26 has detected.

The drive controller 33 is configured to generate a driving signal 22 on the basis of the acceleration signal 23 and the acceleration 25. The drive controller 33 generates a driving signal 22 basically in correspondence with the acceleration signal 23 (that is, the amount of the operation of the accelerator pedal 16). The amount of the operation of the accelerator pedal 16 may, however, be changed more than intended (operated) by the driver as a result of the influence of disturbance such as a shake of the body 3. The drive controller 33 uses a low pass filter to reduce the influence of disturbance in generating a driving signal 22 and thereby prevent the electric motor 12 from operating (that is, the travel speed from changing) as above as unintended by the driver.

The constant determiner 31 is configured to adjust the time constant 37 for the low pass filter in accordance with disturbance. The time constant 37 is preset for the relationship between the acceleration signal 23 and the driving signal 22, and is stored in the storage 35. Adjusting the time constant 37 helps reduce the influence of disturbance in generating a driving signal 22.

The storage 35 is configured to store various items of information such as the acceleration signal 23 and information on the acceleration 25 received by the input section 29, information on the time constant 37 determined by the constant determiner 31, and the driving signal 22 generated by the drive controller 33.

### Control Flow

The description below deals with a flow of generating a driving signal 22, with reference to Figs. 2 to 4.

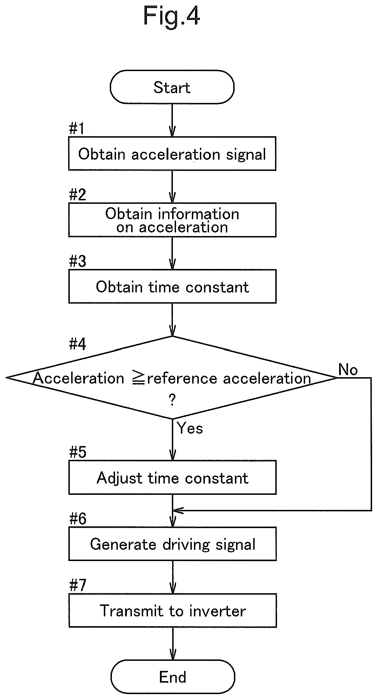

First, the input section 29 continuously receives an acceleration signal 23 from the accelerator sensor 24 and stores the acceleration signal 23 in the storage 35 (see step #1 in Fig. 4). The input section 29 also continuously receives information on the acceleration 25 from the acceleration sensor 26 and stores the information in the storage 35 (see step #2 in Fig. 4).

Next, the constant determiner 31 adjusts the time constant 37 for the low pass filter in accordance with the acceleration signal 23 stored in the storage 35 (see step #3 in Fig. 4). Specifically, the constant determiner 31 increases the time constant 37 with an increase in the amount of a change of the acceleration signal 23. This prevents a driving signal 22 to be generated from changing greatly (that is, allows the driving signal 22 to change gently) in response to a great change of the acceleration signal 23 due to, for example, the influence of disturbance, thereby preventing the driving signal 22 (that is, the operation of the electric motor 12 or the travel speed) from changing rapidly.

Next, the drive controller 33 or the constant determiner 31 determines whether the acceleration 25 is equal to or larger than a reference acceleration 38 preset and stored in the storage 35 (see step #4 in Fig. 4).

If the acceleration 25 is equal to or larger than the reference acceleration 38 (Yes in step #4 in Fig. 4), the constant determiner 31 further adjusts the time constant 37 for the low pass filter in accordance with the acceleration 25 stored in the storage 35 (see step #5 in Fig. 4). Specifically, the constant determiner 31 decreases the time constant 37 as the acceleration 25 increases. This prevents a driving signal 22 to be generated from changing greatly in response to a frequent change of the acceleration signal 23 due to the influence of a shake of the body 3, thereby reducing the influence on the driving signal 22 (that is, the operation of the electric motor 12 or the travel speed).

Next, the drive controller 33 generates a driving signal 22 on the basis of the acceleration signal 23 and the time constant 37. Specifically, the drive controller 33 uses a low pass filter based on the time constant 37 in the storage 35 for the change of the acceleration signal 23 to generate a driving signal 22 on the basis of the acceleration signal 23 as well as the amount of the change of the acceleration signal 23 (see step #6 in Fig. 4). If the acceleration 25 is smaller than the reference acceleration 38 (No in step #4 in Fig. 4), the drive controller 33 generates a driving signal 22 with use of the time constant 37 as adjusted in step #3 so that the driving signal 22 is not based on the acceleration 25.

Next, the drive controller 33 transmits the driving signal 22 to the inverter 13 (see step #7 in Fig. 4). The inverter 13 controls the electric motor 12 in accordance with the driving signal 22, so that the utility vehicle travels as driven by the electric motor 12.

As described above, the drive controller 33 adjusts the time constant 37 for the low pass filter in accordance with the amount of a change of the acceleration signal 23, and thereby allows the amount of a change of the driving signal 22 to decrease with an increase in the amount of the change of the acceleration signal 23. With this configuration, the drive controller 33 prevents the driving signal 22 from changing extremely in response to an increase in the amount of a change of the acceleration signal 23.

The drive controller 33 further adjusts the time constant 37 for the low pass filter in accordance with the acceleration 25, that is, decreases the time constant 37 as the acceleration 25 increases. The drive controller 33 may adjust the time constant 37 in accordance with the acceleration 25 in a continuous or stepwise manner. This configuration allows the drive controller 33 to determine if the acceleration 25 is large that the operation of the accelerator pedal 16 is being influenced by a shake of the body 3 and reduce the amount of a change of the driving signal 22. This allows the drive controller 33 to reduce the influence of a shake or vibration of the body 3 on the accelerator pedal 16.

The above configuration allows the drive controller 33 to (i) generate a driving signal 22 with a reduced change amount if the amount of a change of the acceleration signal 23 is large to prevent the travel speed from changing rapidly and (ii) decrease the time constant 37 in response to a large shake of the body 3 to keep the driving signal 22 (that is, the travel speed) changeable responsively to an operation of the accelerator pedal 16. This in turn allows the drive controller 33 to reduce the influence of disturbance such as a shake of the body 3 to control the travel speed accurately in accordance with the driver's intention.

### Control Result

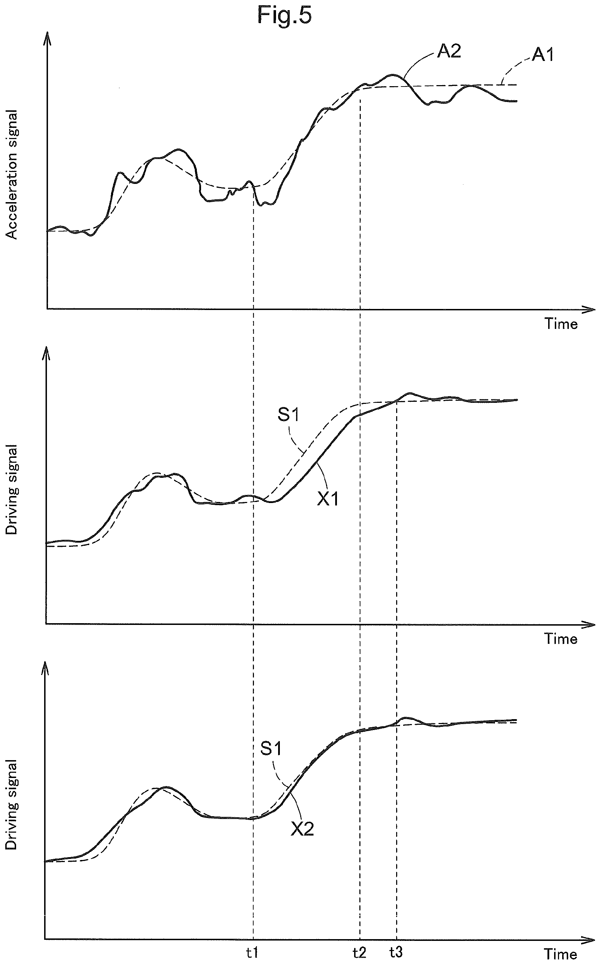

The description below deals with a driving signal 22 generated on the basis of the amount of a change of the acceleration signal 23 and the acceleration 25, with reference to Figs. 2 and 5.

Fig. 5 shows line A1 to indicate a change over time of an acceleration signal 23 intended by the driver and line A2 to indicate a change over time of an acceleration signal 23 actually detected by the accelerator sensor 24. Line A2 indicates that the acceleration signal 23 is deviated from the driver's intention due to, for example, a shake of the body 3. Line S1 indicates a change over time of a driving signal 22 corresponding to the acceleration signal 23 intended by the driver.

Line X1 indicates a change over time of a driving signal 22 generated on the basis of a time constant 37 not based on the acceleration 25. Line X2 indicates a change over time of a driving signal 22 generated on the basis of a time constant 37 based on the acceleration 25.

Line X1 indicates a reduced vibration in the driving signal 22 as a result of a reduced vibration in the acceleration signal 23 indicated with line A2, but also indicates a delay in the change of the driving signal 22 relative to a change of the acceleration signal 23. Line X2, in contrast, indicates a reduced delay in the change of the driving signal 22 relative to a change of the acceleration signal 23.

At time point t1, for instance, the acceleration signal 23 intended by the driver (A1) has an upward trend, whereas the actual acceleration signal 23 has a downward trend due to a shake of the body 3. As a result, the acceleration signal 23 intended by the driver (A1) finishes its increase at time point t2, whereas the driving signal 22 generated not on the basis of the acceleration 25 (X1) has a delay in its increase and does not finish its increase until time point t3.

In contrast, the driving signal 22 generated on the basis of the acceleration 25 (X2) changes more responsively to a change of the acceleration signal 23, and has a reduced delay relative to the driver's intention.

As described above, generating a driving signal 22 on the basis of the amount of a change of the acceleration signal 23 and the acceleration 25 reduces the influence of disturbance on the amount of the change of the acceleration signal 23, and allows the driving signal 22 to be more responsive. This in turn makes it possible to control the travel speed accurately in accordance with the driver's intention.

### Alternative Embodiments

(1) The embodiment described above may be altered to detect the acceleration 25 of the body 3 with use of any acceleration detector other than the acceleration sensor 26. The embodiment may, for instance, include a suspension (not illustrated in the drawings) configured to alleviate vertical vibrations transmitted from the ground to the body 3 and be configured to detect the acceleration 25 on the basis of a stroke of the suspension. The acceleration detector, in this case, includes a stroke detector configured to detect a stroke of the suspension and a calculator configured to differentiate the stroke twice and provide the resulting value as the acceleration 25. This facilitates detecting the acceleration 25 in accordance with the configuration of the utility vehicle.
(2) The embodiments described above may each be altered such that the drive controller 33 uses only the acceleration 25 but not the amount of a change of the acceleration signal 23 to reduce the influence of disturbance. The constant determiner 31 may, in this case, increase the time constant 37 as the acceleration 25 increases. This allows use of a simple configuration to generate a driving signal 22 for control of the travel speed.
(3) The embodiments described above may each be altered to use no reference acceleration 38 so that the constant determiner 31 adjusts the time constant 37 in accordance with the acceleration 25 regardless of its level. This allows use of a simple configuration to generate a driving signal 22 for control of the travel speed.
(4) The embodiments described above may each be altered such that the drive controller 33 uses an element other than a low pass filter to reduce the influence of disturbance.
(5) The embodiments described above may each be altered such that the ECU 21 includes functional blocks other than those described above. The functional blocks of the ECU 21 may, for instance, each be divided further, or a portion of or the entire functional block may be combined with another functional block. The ECU 21 may include an additional functional block for an operation other than braking the utility vehicle, or may be dedicated to generating a driving signal 22. The ECU 21 may function with use of functional blocks other than those described above. Further, one or more or all of the functions of the ECU 21 may be performed by software. Programs as such software are stored in a storage device such as the storage 35 and executed by a processor included in the ECU 21 such as a CPU or a separate processor.
(6) The utility vehicle may include an engine instead of the electric motor 12 as its driving source. The utility vehicle may be a hybrid vehicle drivable by the electric motor 12 and an engine.
(7) The utility vehicle may be provided with an implement, and may be an agricultural work machine such as a tractor or a mower, or another work machine for performing any of various types of work.

### Industrial Applicability

The present invention is applicable to any utility vehicle configured to travel in response to an accelerator operation and any of various work machines.

### Reference Signs List

- 1: Front wheel (travel device)
- 2: Rear wheel (travel device)
- 3: Body
- 12: Electric motor (driving source)
- 13: Inverter
- 16: Accelerator pedal (acceleration operating member)
- 22: Driving signal
- 23: Acceleration signal (amount of operation)
- 24: Accelerator sensor
- 25: Acceleration
- 26: Acceleration sensor (acceleration detector)
- 33: Drive controller
- 37: Time constant

## Claims

1. A utility vehicle, comprising:
a body (3);
a travel device (1, 2) provided for the body (3);
a driving source (12) configured to drive the travel device (1, 2) ;
an acceleration operating member (16) configured to receive an operation for adjusting a travel speed of the utility vehicle;
a drive controller (33) configured to generate a driving signal (22) for the driving source (12); and
an acceleration detector (26) configured to detect a vertical acceleration (25) of the body (3) relative to ground,
the drive controller (33) being configured to generate the driving signal (22) based on (i) an amount of the operation that the acceleration operating member (16) receives and (ii) the acceleration (25).

2. The utility vehicle according to claim 1, wherein
the drive controller (33) is configured to change the driving signal (22) in accordance with an amount of a change in the amount of the operation and attenuates the change of the driving signal (22) for the amount of the change of the amount of the operation in accordance with the acceleration (25).

3. The utility vehicle according to claim 2, wherein
the drive controller (33) is configured to attenuate the change of the driving signal (22) for the amount of the operation with use of a low pass filter and adjusts a time constant for the low pass filter in accordance with the acceleration.

4. The utility vehicle according to claim 3, wherein
the drive controller (33) is configured to decrease the time constant as the acceleration increases.

5. The utility vehicle according to any one of claims 1 to 4, wherein
the acceleration detector (26) is an acceleration sensor.

6. The utility vehicle according to any one of claims 1 to 4, further comprising:
a suspension configured to alleviate a vertical vibration transmitted from the ground to the body (3),
wherein the acceleration detector (26) includes:
a stroke detector configured to detect a stroke of the suspension; and
a calculator configured to differentiate the stroke twice and provide a value resulting from the differentiation as the acceleration (25).

7. The utility vehicle according to any one of claims 1 to 6, wherein
the driving source (12) is an electric motor,
the utility vehicle further comprises
an inverter (13) configured to supply electric power to the electric motor (12), the inverter (13) being controlled by the driving signal (22) so as to control the electric power, which the inverter (13) outputs,
the electric motor (12) is operable at a number of revolutions which number corresponds to the electric power outputted from the inverter (13) in accordance with the driving signal (22), and
the drive controller (33) is configured to generate the driving signal (22) based on the amount of the operation and the acceleration (25).
